# EUROPEAN PATENT SPECIFICATION

(11) **EP 3 913 339 B1**
(45) Date of publication and mention of the grant of the patent: **12.03.2025**
(21) Application number: 20741285.9
(22) Date of filing: 08.01.2020
(51) Int. Cl.: G01J 3/02, G01J 3/32, G01J 3/12, G01J 3/42

(54) **SPECTROPHOTOMETER**
SPEKTROPHOTOMETER
SPECTROPHOTOMETRE

(30) Priority: 14.01.2019 EA 201900082
(43) Date of publication of application: 24.11.2021
(73) Proprietor: UAB "EssentOptics Europe", 08412 Vilnius (LT)
(72) Inventor: KRYVETSKI, Kostantin Nikolaevich, Minsk, 220113 (BY); FIADOTKA, Artem Aleksandrovich, Minsk, 220017 (BY); LISOUSKI, Taras Stanislavovich, Minsk, 220015 (BY)
(74) Representative: Klimaitiene, Otilija
(86) International application number: PCT/BY2020/000001
(87) International publication number: WO 2020/146933

(56) References cited:
- WO-A2-2007/131162
- CN-C- 100 554 936
- CN-Y- 2 835 992
- JP-A- 2007 078 603
- JP-U- S53 161 681
- RU-A- 2009 118 234
- US-A1- 2006 152 726
- KAI HE ET AL: "High-spectral-resolution characterization of broadband high-efficiency reflection gratings", APPLIED OPTICS, OPTICAL SOCIETY OF AMERICA, WASHINGTON, DC, US, vol. 52, no. 4, 2 February 2013 (2013-02-02), pages 653 - 658, XP001580781, ISSN: 0003-6935, DOI: HTTP://DX.DOI.ORG/10.1364/AO.52.000653
- WANG SHENGHAO ET AL: "Motionless and fast measurement technique for obtaining the spectral diffraction efficiencies of a grating", REV. SCI. INSTRUM. REV. SCI. INSTRUM, 5 July 2018 (2018-07-05), pages 1 - 7, XP055974334, Retrieved from the Internet <URL:https://aip.scitation.org/doi/pdf/10.1063/1.5030069> [retrieved on 20221024]

## Description

### FIELD OF INVENTION

The invention relates to the field of optical instrumentation and is intended for use in analyses in industrial laboratories, and for scientific research purposes in analytical studies of the spectral characteristics of various materials.

### BACKGROUND ART

From the prior art, various types of spectrophotometers are known that structurally consist of optical-mechanical and electronic assemblies installed in one housing, and the general principle of their operation is based on measuring the ratio of the intensity of radiation that passed through the object under study to the intensity of radiation that did not pass through this object. Devices, as a rule, are additionally equipped with attachments [1, 2, 3].

The Cary 7000 spectrophotometer [1] is equipped with an additional two-layer detector, which has the ability to move around the specimen, and which is placed in the center of the attachment on a 360-degree rotary table. Attachments can also provide reflection measurements, and can be made as a fiber optic probe, or for other purposes.

The Agilent Cary 60 spectrophotometer [2] is equipped with a Czerny-Turner type monochromator and has an operating wavelength range of 190-1100 nm, a fixed wavelength band of 1.5 nm. The design of the Cary 60 uses a paired Si diode detector and quartz-coated optics, it provides a spectrum sweep speed of up to 24,000 nm/min, a data sampling rate of up to 80 times per second, the device allows for wavelength tuning when measurements are paused and it is not sensitive to ambient light. The Agilent Cary 60 is centrally controlled using a Windows PC.

The well-known single-beam spectrophotometer of UVI range, SF-56 [3], provides automatic single and multiple measurements of the spectral transmittance of liquid and solid transparent substances for one or more specimens at wavelengths specified by the operator, with a specified time interval between measurement cycles, overview scanning and output of specified sections of the spectrum on a video monitor for qualitative analysis, carrying out kinetic measurements and mathematical processing of the measurement results, including the calculation of optical density and concentration, as well as the calculation of the color characteristics of the objects under study. The spectrophotometer is controlled and the measurement results are processed using a specialized controller with a functional keyboard, monitor and printer, or using an external IBM-compatible computer.

The disadvantage of known analogs is the limited ability to move the specimens on the object table during measurements, which, as a result, reduces the functionality of the device and excludes the possibility of measuring transmission or reflection of radiation by a specimen without using special attachments.

There is a known spectrophotometer with a displaceable optical element [4]. The spectrophotometer contains an optical filter for removing light of a higher order as such an element and in such a way that it is driven by a drive mechanism for rotating the diffraction grating without the need for a special drive. The control circuit of the optical filter or of other devices, used as a mechanism for removable insert in the optical path, is implemented with the use of special software. The mechanism has a driving lever integrated with the spectrometer diffraction grating and rotated by the diffraction grating. A driven arm is used for supporting an optical element, located with a possibility to detach the optical path. The driving lever is located at a position contacting the drive arm in a pivot angle range outside the pivot range for wavelength, scanning the diffraction grating. The driving lever is configured to be driven by contact with the drive arm and is displaced to move the optical element between a position on the optical path and a position outside the optical path.

The disadvantage of the analog is the limited degrees of freedom of movement of the specimens provided by the control circuit of the optical filter and other devices used as a mechanism for a removable insert in the optical path.

A spectrophotometer with a two-beam splitting of an optical beam, which is adopted as a prototype [5], is closest to the current invention. The device for splitting the beam of the spectrophotometer contains a housing with a measuring compartment, where an optical system with a reflective part is installed, a motor, a rotary shaft made with the possibility of additional rotation relative to the center of the rotary shaft. The optical system includes a radiation source, a monochromator, a mirror element dividing the light beam coming out of the monochromator into a measuring channel with an assembly of photodetectors and a reference channel with an assembly of photodetectors, and a set of devices for moving specimens during measurements, placed on a rotary object table. In this case, the rotary object table is equipped with three structures; the first structure is intended for the light-transmitting part through which the light beam directly passes, the second structure is the reflective part of the reflected light beam, and the third structure is designed to block the light beam and absorb the dark part of the light beam. The light-transmitting portion, the reflective portion, and the dark part are distributed around the circumference in a predetermined order. The rotating disc additionally contains a rotating element that rotates about a center of the rotary shaft. The rotating element is provided with a measuring through hole or recess for a rotation period. The rotation period is determined by multiple through holes or recesses and a plurality of rotation periods. The throughway opening or recess is evenly distributed along the edge of the rotating part, additionally contains a photoelectric switch, which is provided with a groove built into the edge of the rotating part, and accordingly receives a photosensitive reception on both sides of the rotating element and a light-emitting source. The photosensitive receiving part and the emitting part of the light source, respectively, are located oppositely on both sides on the groove walls and are configured to determine the rotation period of the throughway opening or recess. The motor is connected to a rotary shaft with the possibility of rotation of the rotating element and the rotating wheel with the provision of synchronous rotation at a given speed through the rotary shaft. The reflective part contains a first mirror, a second mirror, and a third mirror, which are respectively located on the front and rear sides of the rotary object table. The first mirror and the third mirror are located on the same side of the rotary object table, with the first mirror being used to reflect the light beam towards the rotary object table, and the light beam reflected from the first mirror forming a reference light beam having a predetermined sequence by transmitting a portion of the light beam onto the second mirror. The beam reflected by the first mirror forms a sampling beam having a predetermined sequence through the reflective part and the third mirror. And the beam reflected by the first mirror is absorbed by the dark part and forms an occlusal beam having a predetermined sequence. The first structure of the rotary object table is a light-transmitting part through which the light beam directly passes. The second structure is a part of the reflected beam. And the third structure is designed to block the light beam and absorb its tempo part. Light-transmitting part, reflective part and dark part are distributed on a circle on the rotary object table in a predetermined order, while the light-transmitting part, the reflective part and the dark part are arranged in pairs and symmetrically.

The disadvantage of the prototype is the limited ability to measure the specimens under study due to the movement of the rotary object table in one plane, which reduces the correctness of the measurement behavior.

The research paper by Kai He et al, High-spectral-resolution characterization of broadband high-efficiency reflection gratings, Applied Optics Vol. 52, Issue 4, pp. 653-658 (2013), https://doi.org/10.1364/AO.52.000653 discloses a spectrophotometric device for analysing samples, such as multilayer dielectric gratings. The device comprises a bromine tungsten lamp B, a monochromator, an aperture A, a polariser assembly P, a collimator C, a beam splitter S configured to provide a measruring channel c and a reference chanel b. The reference channel comprises a focusing lens F₂ and a detector D₂. The measuring channel comprises a rotary sample table R2 and a further rotary table R₁, wherein the rotary tables have a common shaft. Rotary table R₁ is connected via an arm to a focusing lens F₁ and a detector D₁ of the measuring channel. Further, the paper discloses an application of measuring the reflected light from a tested sample, such as a diffraction grating.

The Japanese patent application JP2007078603 discloses a spectrophotometer to measure the light intensity transmitted through a sample or the light intensity reflected from the surface of the sample, and obtains the absorption spectrum or reflection spectrum of the sample, thereby analyzing optical characteristics of the sample. There are reference and sample measuring channels, a detector 14 with changeable position for measurement of the sample, and a detector of the main body A of the spectrophotometer is used as a reference detector. The sample stage 12 has a rotation center, and an arm 19 with the detector 14 rotates about the same rotation axis as the sample stage 12. A photomultiplier tube is used as the detector. The light from the source is monochromatized and distributed to the sample and reference light beams by mirrors.

The Japanese utility model application JPS53161681U discloses a goniospectrophotometer for measuring the angle-dependent spectral reflection or transmission properties of an object by compensating for the polarization characteristics of an optical system. The object (sample) 8 reflects the illuminated light at an angle (45°) to the measuring channel (9, 10, 11), and the document discloses a solution for routine compensations (12) of polarization variances of the incident light to the sample 8. The polarization of the incident light is made constant by the compensation means, thereby, enabling measurements of angle-dependent spectral reflectance/transmission properties of the object (8), being not influenced by variations of the polarization of the incident light.

The aims and technical solutions of the above discussed prior art documents, however, are different from those of the present invention.

### SUMMARY OF INVENTION

The aim of the invention is to improve the performance and measurement accuracy of the specimens under study.

The technical result of the invention is to improve the quality and accuracy of angular dependence measurements and measurements of complex prisms, regardless of the thickness of the part or the geometric complexity of the prisms.

The technical result is achieved by the spectrophotometer according to independent claim 1.

Further aspects of the invention are defined by the dependent claims.

### DESCRIPTION OF DRAWINGS

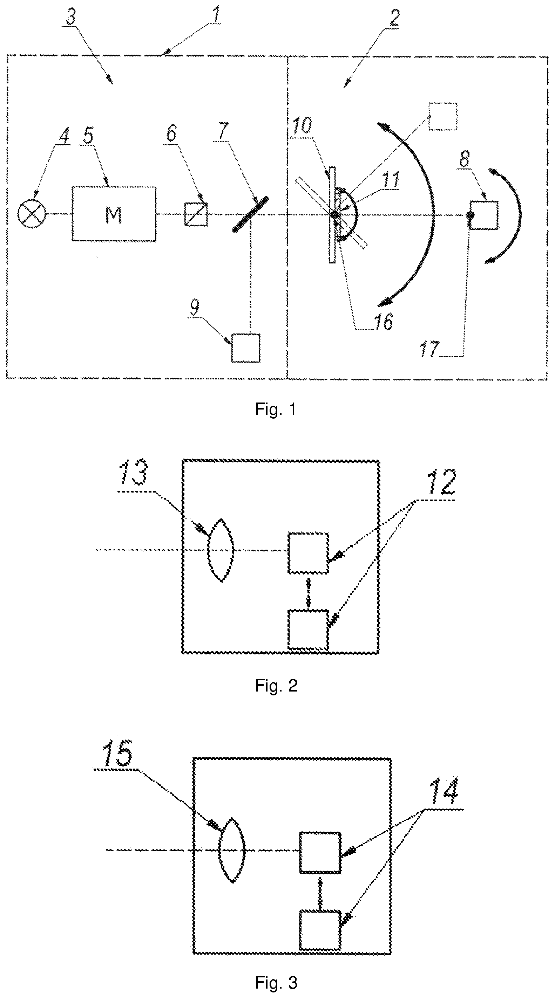

The essence of the invention is illustrated in drawings in Fig. 1-3.
Fig. 1 - shows the basic optical diagram of the spectrophotometer.
Fig. 2 - shows an assembly of photodetectors of the measuring channel.
Fig. 3 - shows an assembly of photodetectors of the reference channel.

### DETAILED DESCRIPTION

The spectrophotometer contains a housing (1), a measuring compartment (2) and a source of monochromatic radiation (3), where a radiation source (4), a monochromator (5), an assembly of polarizers (6), a mirror element (7), a measuring channel with an assembly (8) of photodetectors (12) with a lens (13), a reference channel with an assembly (9) of photodetectors (14) with a lens (15); a rotary object table (10) with a hollow rotation shaft (16) and (11) specimens; devices for moving the assembly (8) of the measuring channel of the photodetectors (12) with a rotation vertical shaft (17) are installed.

The spectrophotometer operates in the following manner. In accordance with the instructions, turn on the device and bring it to readiness. To carry out measurements, in advance place a specimen 11 on the rotary object table 10 inside the measuring compartment 3 in the housing 1. The specimen 11 is fixed and the measuring compartment is closed 2. During measurements, a triple exposure of the specimen 11 is provided. For this, the rotary object table 10 with the specimen 11 is rotated around the shaft 16 clockwise or counterclockwise until the end face of the specimen 11 crosses the light beam coming out from the source 4 and then passes through the polarizer 6 and exits the monochromator 5, while part of the light flux is directed by the mirror element 7 into the lens 15 to the photodetectors 14 of the assembly 9 of the reference channel, and the other part of the light flux is directed to the specimen 11 and after transmission or reflection of the light beam, it enters through the measuring channel through the lens 13 into the photodetectors 12 of the assembly 8. Simultaneously, the assembly 8 with the photodetectors 12 is rotated around the vertical rotation shaft 17 clockwise or counterclockwise until it intersects with the beam entering the lens 13 on the photodetectors 12 and the independent rotation of the assembly 8 with the photodetectors 12 around the rotation shaft 16 of the rotary object table 10 with receiving a light beam into the lens 13 of the photodetectors 12 and passing through the measured specimen 11 or reflected from the measured specimen 11 light beam exactly along the normal with or without displacement of the light beam.

The rotary object table 10 is mounted on the rotation shaft 16, which is hollow (not shown in the drawing) in such a way to make it possible to lay power cable (not shown in the drawing) through the cavity of the shaft 16 and control remotely the rotary object table 10 with the specimen 11 relative to the beam light coming out of the monochromator 5 without opening the measuring compartment 2. Also, the spectrophotometer is equipped with a set of rotary object tables 10, which are replaceable and with motorized drives (not shown in the drawing). The rotary object table 10 has a mating electrical connector (not shown in the drawing), which is installed in the mating part of the assembly for its installation (for example, in the form of a dovetail). When installing the motorized rotary object table 10 through the electrical connector, power is supplied to the electrical circuit of the control board with the controller and the computer remote control of the rotary object table 10 without opening the measuring compartment 2.

Inside the housings (not shown in the drawing) of the assembly 8 with photodetectors 12 of the measuring channel and assembly 9 with photodetectors 14 of the reference channel, sets of photodetectors 12 and 14 are installed, respectively (from 1 to 4 pieces in various combinations, for example, PMT, Si, InGaAs, PbS, PbSe, MCT, etc., with and without cooling) and a mechanism (not shown in the drawing) for automatic positioning of the photodetectors 12 and 14 on the beam axis, which are used depending on the required spectral range of measurements.

The implementation of a triple exposure of specimens 11 during measurements, due to the combination of rotations of the rotary object table 10 of the corresponding rotations of the assembly 8 with photodetectors 12, ensures the achievement of the claimed technical result and, as a result, increases the quality and accuracy of angular dependence and polarization measurements of transmission and reflection, as well as measurements of complex prisms regardless of the thickness of the specimens or the geometric complexity of the prisms.

### LIST OF CITATIONS

**1.** New Universal Spectrophotometer Cary 7000. ALSI-CHROM LLC, http://www.alsichrom.com , © 2014.
**2.** Spectrophotometer Agilent Cary 60. North House Business Center, Millab. www.millab.ru , 2018.
**3.** UVI Spectrophotometer SF-56. OKB SPEKTR LLC, http://ok.b-spectr.ru/products/sf/sf56/ , 2018.
**4.** JP patent application No. 2010160025 (A), 22.07.2010.
**5.** CN patent application No. 107796514 (A), November 24, 2017 (prototype).

## Claims

1. Spectrophotometer comprising
- a housing (1) wherein the housing (1) comprises a measuring compartment (2) and a source of monochromatic radiation (3), comprising a radiation source (4), a monochromator (5),
- an assembly of polarizers (6), a measuring channel (8) with an assembly of photodetectors (12) and a lens (13), a reference channel (9) with an assembly of photodetectors (14) and a lens (15),
- a mirror element (7) configured to divide the light beam coming out of the monochromator (5) into the measuring channel (8), the reference channel (9),
- a rotary object table (10) with a specimen (11) for measurements, wherein the rotary object table (10) is configured to provide an exposure of the specimen (11) during measurements, wherein
- the rotary object table (10) is configured to rotate around its own rotation shaft (16) clockwise or counterclockwise until the moment of intersection of the end face of specimen (11) with the light beam coming out from the monochromator (5), and
- the measuring channel (8) is configured to rotate around the rotation shaft (16) of the rotary object table (10) clockwise or counterclockwise until the moment of intersection with the light beam coming out from the monochromator (5),
**characterized in that**
the measuring channel (8) has a further rotation shaft (17) oriented in parallel to the shaft (16) of the rotary table (10), the further shaft (17) being different from the rotation shaft (16) of the rotary object table (10), and the measuring channel (8) assembly is configured to rotate around the further rotation shaft (17), independent from the rotation around the rotation shaft (16) of the rotary object table (10) clockwise or counterclockwise until the moment of intersection with the light beam entering the lens (13) of the photodetectors (12) of the measuring channel (8), thereby ensuring the reception of the light beam into the lens (13) of the photodetectors (12) and the light beam passing through the measured specimen (11) or reflected from the measured specimen (11) light beam exactly along the normal, with or without displacement of the light beam.

2. The spectrophotometer according to Claim 1, **characterized in that** the assembly of the photodetectors of the measuring channel (8) is made with one or more photodetectors (12).

3. The spectrophotometer according to Claim 1, **characterized in that** the assembly of the photodetectors of the reference channel (9) is made with one or more photodetectors (14).

4. The spectrophotometer according to any of Claims 2 to 3, **characterized in that** the assemblies of photodetectors of the measuring channel (8) and/or the reference channel (9) comprise 1 to 4 photodetectors, such as PMT, Si, InGaAs, PbS, PbSe, MCT, with and without cooling, in various combinations, and a mechanism for automatic positioning of the photodetectors 12 and 14 on the beam axis is arranged for spectral range measurements.

5. Spectrophotometer according to Claim 1, **characterized in that** the rotation shaft (16) of the rotary object table (10) is hollow with the possibility of laying a power and signal cables through the hollow to provide remote control of the rotation of the rotary object table (10) and movement of the specimens (11) relative to the light beam exiting the monochromator (5), without opening the measuring compartment (2).

## Patentansprüche

1. Spektrophotometer, umfassend
- ein Gehäuse (1), wobei das Gehäuse (1) einen Messraum (2) und eine Quelle monochromatischer Strahlung (3) umfasst, die eine Strahlungsquelle (4) umfasst, einen Monochromator (5),
- eine Anordnung von Polarisatoren (6), einen Messkanal (8) mit einer Anordnung von Photodetektoren (12) und einer Linse (13), einen Referenzkanal (9) mit einer Anordnung von Photodetektoren (14) und einer Linse (15),
- ein Spiegelelement (7), das dazu konfiguriert ist, den aus dem Monochromator (5) austretenden Lichtstrahl in den Messkanal (8), den Referenzkanal (9) zu unterteilen,
- einen drehbaren Objekttisch (10) mit einer Probe (11) für Messungen,
wobei der drehbare Objekttisch (10) dazu konfiguriert ist, eine Exposition der Probe (11) während Messungen bereitzustellen, wobei
- der drehbare Objekttisch (10) dazu konfiguriert ist, sich um seine eigene Drehwelle (16) im Uhrzeigersinn oder gegen den Uhrzeigersinn zu drehen, bis sich die Endfläche der Probe (11) mit dem Lichtstrahl, der aus dem Monochromator (5) austritt, schneidet und
- der Messkanal (8) dazu konfiguriert ist, sich um die Drehwelle (16) des drehbaren Objekttischs (10) im Uhrzeigersinn oder gegen den Uhrzeigersinn zu drehen, bis er sich mit dem Lichtstrahl, der aus dem Monochromator (5) austritt, schneidet,
**dadurch gekennzeichnet, dass** der Messkanal (8) eine weitere Drehwelle (17) aufweist, die parallel zu der Welle (16) des drehbaren Tischs (10) ausgerichtet ist, wobei sich die weitere Welle (17) von der Drehwelle (16) des drehbaren Objekttischs (10) unterscheidet, und die Anordnung des Messkanals (8) dazu konfiguriert ist, sich unabhängig von der Drehung um die Drehwelle (16) des drehbaren Objekttischs (10) im Uhrzeigersinn oder gegen den Uhrzeigersinn um die weitere Drehwelle (17) zu drehen, bis er sich mit dem Lichtstrahl, der in die Linse (13) der Photodetektoren (12) des Messkanals (8) eintritt, schneidet, wodurch der Empfang des Lichtstrahls in der Linse (13) der Photodetektoren (12) und des Lichtstrahls, der durch die gemessene Probe (11) hindurchgeht oder von dem Lichtstrahl der gemessenen Probe (11) genau entlang der Normalen reflektiert wird, mit oder ohne Verschiebung des Lichtstrahls, sichergestellt wird.

2. Spektrophotometer nach Anspruch 1, **dadurch gekennzeichnet, dass** die Anordnung der Photodetektoren des Messkanals (8) mit einem oder mehreren Photodetektoren (12) erfolgt.

3. Spektrophotometer nach Anspruch 1, **dadurch gekennzeichnet, dass** die Anordnung der Photodetektoren des Referenzkanals (9) mit einem oder mehreren Photodetektoren (14) erfolgt.

4. Spektrophotometer nach einem der Ansprüche 2 bis 3, **dadurch gekennzeichnet, dass** die Anordnungen von Photodetektoren des Messkanals (8) und/oder des Referenzkanals (9) 1 bis 4 Photodetektoren, wie etwa PMT, Si, InGaAs, PbS, PbSe, MCT, mit und ohne Kühlung, in verschiedenen Kombinationen umfassen und ein Mechanismus zum automatischen Positionieren der Photodetektoren 12 und 14 auf der Strahlenachse für Spektralbereichsmessungen angeordnet ist.

5. Spektrophotometer nach Anspruch 1, **dadurch gekennzeichnet, dass** die Drehwelle (16) des drehbaren Objekttischs (10) hohl ist, wobei die Möglichkeit besteht, Strom- und Signalkabel durch den Hohlraum zu verlegen, um eine Fernsteuerung der Drehung des drehbaren Objekttischs (10) und der Bewegung der Proben (11) in Bezug auf den Lichtstrahl, der den Monochromator (5) verlässt, ohne Öffnen des Messraums (2) bereitzustellen.

## Revendications

1. Spectrophotomètre comprenant
- un boîtier (1) dans lequel le boîtier (1) comprend un compartiment de mesure (2) et une source de rayonnement monochromatique (3), comprenant une source de rayonnement (4), un monochromateur (5),
- un ensemble de polariseurs (6), un canal de mesure (8) avec un ensemble de photodétecteurs (12) et une lentille (13), un canal de référence (9) avec un ensemble de photodétecteurs (14) et une lentille (15),
- un élément miroir (7) configuré pour diviser le faisceau lumineux sortant du monochromateur (5) dans le canal de mesure (8), le canal de référence (9),
- une table d'objet rotative (10) avec un échantillon (11) pour des mesures, dans lequel la table d'objet rotative (10) est configurée pour fournir une exposition de l'échantillon (11) pendant les mesures, dans lequel
- la table d'objet rotative (10) est configurée pour tourner autour de son propre arbre de rotation (16) dans le sens des aiguilles d'une montre ou dans le sens inverse des aiguilles d'une montre jusqu'au moment d'intersection de la face d'extrémité de l'échantillon (11) avec le faisceau lumineux sortant du monochromateur (5), et
- le canal de mesure (8) est configuré pour tourner autour de l'arbre de rotation (16) de la table d'objet rotative (10) dans le sens des aiguilles d'une montre ou dans le sens inverse des aiguilles d'une montre jusqu'au moment d'intersection avec le faisceau lumineux sortant du monochromateur (5),
**caractérisé en ce que** le canal de mesure (8) a un autre arbre de rotation (17) orienté parallèlement à l'arbre (16) de la table rotative (10), l'autre arbre (17) étant différent de l'arbre de rotation (16) de la table d'objet rotative (10), et l'ensemble canal de mesure (8) est configuré pour tourner autour de l'autre arbre de rotation (17), indépendamment de la rotation autour de l'arbre de rotation (16) de la table d'objet rotative (10) dans le sens des aiguilles d'une montre ou dans le sens inverse des aiguilles d'une montre jusqu'au moment d'intersection avec le faisceau lumineux entrant dans la lentille (13) des photodétecteurs (12) du canal de mesure (8), assurant ainsi la réception du faisceau lumineux dans la lentille (13) des photodétecteurs (12) et le faisceau lumineux traversant l'échantillon mesuré (11) ou étant un faisceau lumineux réfléchi par l'échantillon mesuré (11) exactement le long de la normale, avec ou sans déplacement du faisceau lumineux.

2. Spectrophotomètre selon la revendication 1, **caractérisé en ce que** l'ensemble des photodétecteurs du canal de mesure (8) est réalisé avec un ou plusieurs photodétecteurs (12).

3. Spectrophotomètre selon la revendication 1, **caractérisé en ce que** l'ensemble des photodétecteurs du canal de référence (9) est réalisé avec un ou plusieurs photodétecteurs (14).

4. Spectrophotomètre selon l'une quelconque des revendications 2 et 3, **caractérisé en ce que** les ensembles de photodétecteurs du canal de mesure (8) et/ou du canal de référence (9) comprennent 1 à 4 photodétecteurs, tels que PMT, Si, InGaAs, PbS, PbSe, MCT, avec et sans refroidissement, dans diverses combinaisons, et un mécanisme de positionnement automatique des photodétecteurs 12 et 14 sur l'axe de faisceau est agencé pour des mesures de plage spectrale.

5. Spectrophotomètre selon la revendication 1, **caractérisé en ce que** l'arbre de rotation (16) de la table d'objet rotative (10) est creux avec la possibilité de faire passer un câble d'alimentation et de signal à travers le creux pour permettre la commande à distance de la rotation de la table d'objet rotative (10) et du mouvement des échantillons (11) par rapport au faisceau lumineux sortant du monochromateur (5), sans ouvrir le compartiment de mesure (2) .
